# EUROPEAN PATENT SPECIFICATION

(11) **EP 0 393 108 B1**
(45) Date of publication and mention of the grant of the patent: **02.03.1994**
(21) Application number: 89900280.2
(22) Date of filing: 02.12.1988
(51) Int. Cl.: H04N 3/36

(54) **CORRECTION OF FILM INSTABILITY IN TELECINE**
KORREKTUR DER FILMINSTABILITÄT IN FERNSEHFILMABTASTERN
CORRECTION DE L'INSTABILITE DU FILM DANS DES EQUIPEMENTS DE TELECINEMA

(30) Priority: 02.12.1987 GB 8728185
(43) Date of publication of application: 24.10.1990
(73) Proprietor: RANK CINTEL LIMITED, Ware Hertfordshire SG12 OAE (GB)
(72) Inventor: MUMFORD, Ronald, Walter, John, (deceased) (GB)
(74) Representative: Harland, Linda Jane
(86) International application number: GB8801053
(87) International publication number: WO8905554

(56) References cited:
- GB-A- 1 412 128
- US-A- 3 702 896
- US-A- 4 104 680

## Description

The present invention relates to a method and apparatus for correcting film instability in a telecine in which a reference target pattern is formed on a film to be scanned by a telecine, the target pattern occupying a predetermined position on the film relative to an image frame, whereby, by detecting the target pattern, the position of the frame can be ascertained and the area of the film scanned by the telecine adjusted substantially to coincide with the image frame.

In conventional telecine equipment, the CRT beam scans the same area of the film gate for each frame. If the frame is slightly misplaced on the film its actual position will not coincide exactly with the CRT scan with the result that the final television image will appear to 'weave' slightly both from side-to-side and top-to-bottom. Mis-positioning of the film frame may have many different causes including irregular sprocket hole pitch, camera, printer or telecine misregistration or velocity errors, or irregularities in the film edge produced during film slitting. Neither electronic cameras nor computer generated images are susceptible to film instability errors. Consequently, where electronic and film images are mixed or superimposed during post-production editing, film instability may give rise to an intolerable degree of film image movement. It would therefore be desirable to minimise film instability effects.

One of the methods most frequently used in reducing film instability relies on the use of the best available pin-registered film camera and the original negative or reversal film being scanned in telecine equipment incorporating a special pin-registered gate. This method relies on the accuracy of the film camera and telecine gates; there being no intermediate film processes. The telecine gate can, however, operate accurately only at a slower speed than the original shooting speed with the result that the final picture is produced at a Slower speed than usual. This, in turn, necessitates the use of a special video tape recorder. Furthermore, both the telecine and the video recorder use more expensive operating time than would be required at normal operating speed.

It has also been proposed, in US patent US-A-4 104 680 to use the sprocket holes in the film as a reference point; a signal indicating where the sprocket hole is positioned is compared with an ideal position and the signal resulting from the comparison is applied to correct the scan position. In practice, this system is not entirely satisfactory because it is common for sprocket holes to suffer deformed edges or to become clogged with dirt or dust. Furthermore, the Holland patent US-A-4,104,680, is concerned only with the correction of horizontal weave, that is to say, weave in a direction transverse to the movement of the film.

The correction of horizontal or lateral weave is also addressed in U.S. patent US-A-3 780 222 (Pickstock). The document describes an arrangement in which a correction of the sprocket hold edges but rather by detection of reference marks formed on the film, for example, synchronisation marks of the kind typically found on cinematographic film.

U.S. patent US-A-3 609 228 (Goldmark) also describes a system which uses synchronising marks to correct weave but uses a separate light source in detecting the reference marks.

The apparatus and method in accordance with the invention are characterised in that the reference target pattern includes at least one linear portion, the linear portion being scanned by the telecine CRT along a path which oscillates transversally of the linear portion, and the output of a photodetector used to detect the intensity of light from the CRT transmitted by the film being sampled at intervals corresponding to the extremes of the oscillation of the scanning path; consecutive samples being compared to provide an indication of the displacement of the linear portion relative to the central longitudinal axis of the oscillating path.

Preferably, the reference target pattern is formed by imaging a reference target onto the film when the film is exposed in a camera to form an image in the image frame.

Thus, the target pattern occupies a constant position relative to the image frame and is unaffected by any damage to or in the placing of the sprocket holes.

Since a number of comparisons of pairs consecutive samples can be made, the effect of dirt on the film is minimised.

A method and apparatus in accordance with the invention will now be described in detail, by way of example only, with reference to the drawings, in which:

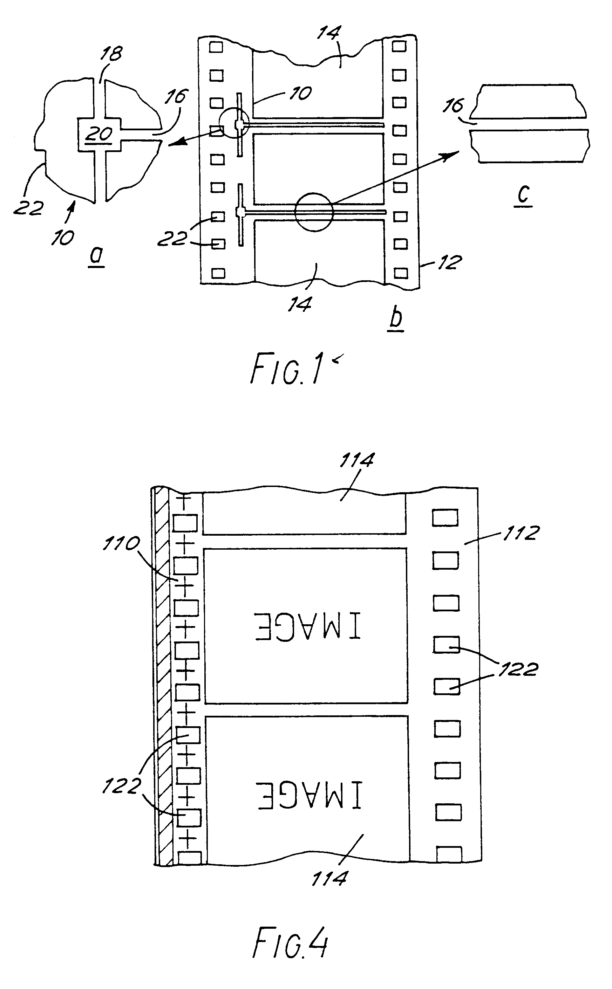

Figure 1b is a schematic representation of film for use in the method of the invention;
Figures 1a and 1c are enlarged fragmentary views of the circled areas of Figure 1a;
Figure 2a shows the signal added to the scan of the reference target pattern in the method of the invention;
Figures 2b to 2d illlustrate the waveform of the signal output by the telecine photodetector in the method of the invention during a scan of the reference target pattern;
Figure 3 is a diagrammatic representation of a detection circuit for use in the method and apparatus of the invention; and
Figure 4 is a schematic representation of a modified film for use in the method of the invention.

In accordance with the invention, film instability in telecine equipment is reduced by adjusting the raster position of the area of film Scanned by the telecine CRT in response to the detected position of reference target patterns associated with the image frames on the film. It is preferred that the camera used to shoot the film is adapted to expose a reference target with each frame shot. In this way, the reference target pattern on the exposed film will occupy precisely the same position with respect to each frame and will give an accurate indication of the location of the frame on the strip of film. Errors due to variations in the size or position of the film sprocket holes or due to any misregistration in the film camera, printer or telecine itself can be eliminated.

Figure 1 shows a preferred form of reference target pattern 10 on a strip of film 12, the images on which are to be converted into an electronic television or video signal by means of a flying spot telecine. One reference target pattern 10 is formed for each film frame 14. As can be seen more clearly from Figures 1b and 1c, the target pattern 10 consists of a horizontal line 16 between each pair of adjacent frames 14 and a vertical line 18 between one edge of the frames 14 and the sprocket holes 22 formed close to the edge of the film 12. The horizontal line 16 and vertical line 18 intersect and, at their intersection, there is a rectangular area 20 whose dimensions are greater than the thickness of the lines 16 and 18.

It will be noted that the target pattern 10 is shown as consisting of clear or white lines against a black area. On a positive print of a conventional cinema film the pattern would take this form. On a negative, the target pattern 10 would appear as black lines on a clear ground.

When the film 12 is scanned in the telecine, the reference target pattern 10 is scanned to give the coordinates for the start of the scan of the next film frame 14. The coordinates are updated each time a reference target pattern 10 is scanned, that is, as shown , prior to the scan of each frame. No further adjustment to the position of each scan is made during the course of the scan once its starting point has been determined. The horizontal and vertical lines 16 and 18 of each target pattern 10 are scanned sequentially, as will be described in greater detail below, to give the longitudinal and transverse coordinates, respectively.

When the vertical line 18 of the target pattern 10 is scanned, a small horizontal sine or square wave deflection is added to the vertical scan carried out by the telecine CRT. Thus the telecine scanning spot oscillates horizontally as it moves vertically along the line 18. Light from the scanning spot passes through the film and is directed to a photocell which produces an output signal proportional to the amount of light passing through the film. The output signal generated by the photocell is sampled at the peaks of the superimposed horizontal oscillation.

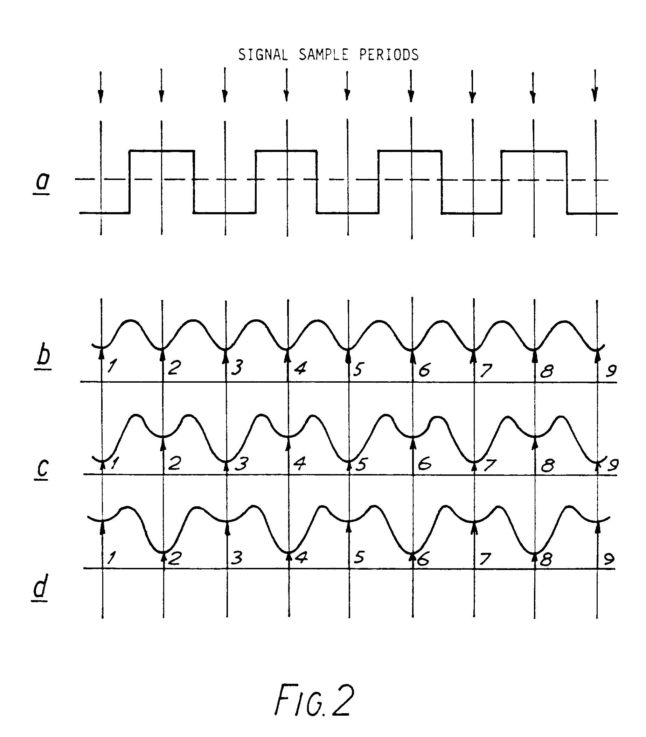

Figure 2a shows a horizontal square wave applied to the vertical scan. If the vertical line 18 of the target pattern 10 is centrally-positioned with respect to the horizontal oscillation of the telecine flying spot, the alternate samples taken at the peaks of the horizontal oscillation will be equal in amplitude. The output of the photocell in these circumstances will be regular and symmetrical as shown in Figure 2b.

If, however, the line 18 of the target pattern is off -centre due to film instability of some kind, then the alternate samples taken at the photocell output will not be equal in amplitude. The difference between the alternate samples will give an indication of the polarity and magnitude of the displacement of the target pattern 10 from its ideal position.

Thus, Figure 2c shows the photocell output when the vertical line 18 of the target pattern 10 is displaced towards one of the frames 14 and away from the edge of the film (it will be appreciated that the scan of the vertical line 18 determines the position of the target pattern 10 and its associated frame 14 transversely of the film strip 12). The odd samples give a higher output than the even.

Figure 2d shows the photocell output when the vertical line 18 is displaced towards the edge of the film strip 12 and away from the adjacent frame 14 and the even samples give a higher output than the odd.

A similar scan is then carried out for the horizontal line 16 of the target pattern 10 to give the longitudinal position but, of course, a vertical rather than horizontal oscillation is added to the scan signal.

As mentioned above, there is at the intersection of horizontal and vertical reference lines 16 and 18 a rectangular area 20 of dimensions greater than the widths of the lines 16 and 18. When the area 20 is reached by the spot in the course of a scan, consecutive odd and even samples will be high. This can be detected and provides an indication that the intersection has been reached and the other reference line should be scanned.

The scanning spot oscillates a number of times as it travels along each of the lines 16 and 18 of the target pattern 10, for example, one hundred times per reference line. Consequently, a number of comparisons between the samples taken at adjacent pairs of peaks of the superimposed oscillation can be made and the results integrated to produce an error signal. Because a relatively large number of comparisons can be made, the overall error in the error signal produced by integration would be small even if a few of the comparisons were distorted by the presence of dirt on the film.

Alternatively, as each reference line 16 or 18 is scanned with the oscillating spot, the integrated error signal can be applied to the appropriate deflection amplifiers in a negative feedback circuit. With this arrangement, the scan would, as it progressed, be re-centred on the reference line 16 or 18. The scan current at the end of the scan of each line 16 or 18 could then be sampled to provide an indication of the displacement of the next frame 14 from its ideal position.

Since accurate information as to the position of each frame 14 must be obtained from a single scan of its associated reference target 10, it is important that the effect of dirt on the film at any time during exposure, printing or scanning be reduced as much as possible. A target pattern 10 of the shape described has the advantage that the effect of dirt is reduced due to the fact that a large number of comparisons can be made and the results combined during the scan of each reference line 16 and 18. Additionally, the use of a negative feedback circuit to re-centre the oscillating flying spot on the reference line 16 or 18 reduced both film registration and scan current drift errors.

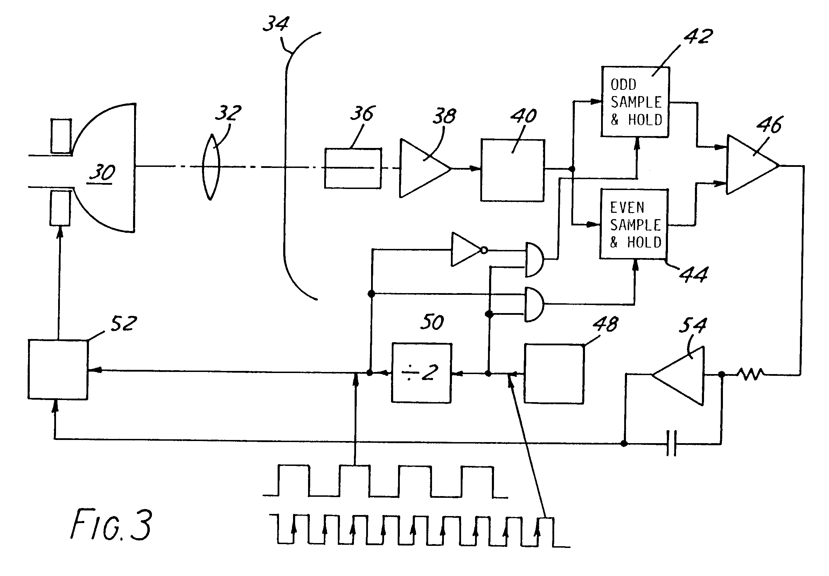

Figure 3 is a block diagram of a negative feedback arrangement for re-centring the oscillating flying spot as described above.

The negative feedback arrangement is shown in the context of a flying spot telecine which includes a cathode ray tube 30 which produces the flying spot, an objective lens 32 which projects the spot onto film passing through a film gate 34 and a photomultiplier 36 which provides an output signal dependent on the intensity of the light transmitted by the film at the gate 34. The current output from the photomultiplier 36 is converted to a voltage by a head amplifier 38 and the output from the amplifier is passed to a corrector circuit 40 which compensates for the afterglow of the cathode ray tube phosphor.

The output from the corrector circuit 40 is then passed to two sample-and-hold circuits 42 and 44 whose outputs are applied to a comparator 46. A clock generator 48 provides a clock signal which, during scanning of the reference target pattern 10, is used both to give the superimposed oscillation which causes the spot to oscillate about the reference line 16 or 18 and the sample pulses. The output of the clock generator 48 is divided by two by means of the circuit 50 and applied to the deflection current and scan amplifier circuits 52 which provide the main scan in the CRT 30. The undivided clock signal is used to drive the sample-and-hold circuits 42 and 44.

The sample-and-hold circuits 42 and 44 sample the corrected output of the photomultiplier 36 at intervals which correspond to the odd and even peaks of the superimposed oscillation, respectively. The comparator 46 provides an error signal proportional to the displacement of the scanning spot oscillation relative to the reference line. The output from the comparator 46 is integrated by an integrator 54 which averages the error signal over a number of cycles, thus minimising the effects of dirt on the film. The integrated, averaged error signal is then applied as a correction signal to the scan amplifiers 52 to cause the oscillating path of the scanning spot to be re-centred on the reference line.

Additional circuitry (not shown) will be provided to sample the scan currents close to the end of the scan of the reference line 16 or 18. These samples are used to fix the coordinates for the beginning of the scan of the next frame 14. It will also be necessary to provide suitable circuitry to stabilise the position of the film strip 12 during start-up, as the position of the horizontal reference line 16 will not be known.

The vertical reference line 18 and, hence, the transverse location of the frame 14 on the film strip 12 will be fixed roughly by the positioning of the film strip 12 in the telecine and the engagement of the film gate pins in the sprocket holes 22. The position of the horizontal reference line 16 relative to the optical centre line can be determined by scanning the vertical reference line 18 until the presence of a rectangular area 20 is detected as outlined above. The position of the rectangular area 20 provides an indication of the location of the horizontal reference line 16 which can be used either to start the scan of the reference line 16 or to re-position the film strip 12.

Whilst it is to be preferred that the target pattern 10 is formed by exposing a reference target when the film is shot, it could be added to the film as raw stock during the manufacturing stage. As shown in Figure 4, the target pattern 110 would be positioned by reference to the punch used to produce the sprocket holes 122 in the film strip 112. Although it is becoming standard for the image frames 114 to occupy the same position relative to groups of four sprocket holes 122, it is not possible to determine, until the film has been shot, which sprocket hole 122 will be the first of each group of four. Consequently, If the reference target patterns 110 are printed onto the raw film stock, each sprocket hole 112 must have a reference pattern associated with it, although only one per film frame will be scanned by the telecine.

In practice, the reference lines 16 and 18 forming the target pattern 10 or 110 will have have a sharp division between dark and light due to limitations when exposing the reference target or printing the pattern onto raw film stock. This is, in fact, desirable and advantageous because, if the scanning spot oscillation is well off -centre relative to the reference line, there will still be a difference between the odd and even samples which will indicate in which direction the scan is displaced.

## Claims

1. A method for correcting film instability in a telecine apparatus in which a reference target pattern (10) is formed on a film (12) to be scanned by the telecine, the target pattern (10) occupying a predetermined position on the film (12) relative to an image frame (14), whereby, by detecting the target pattern (10), the position of the frame (14) can be ascertained and the area of the film (12) scanned by the telecine apparatus adjusted substantially to coincide with the image frame (14); the method being characterised in that the reference target pattern (10) includes at least one linear portion (16,18), each of the linear portions being scanned by the telecine CRT along a path which oscillates transversely of the linear portion; and in that the output of a photodetector used to detect the intensity of light from the CRT transmitted by the film is sampled at intervals corresponding to the extremes of the oscillation of the scanning path; consecutive samples being compared to provide an indication of the displacement of the linear portion (16,18) relative to the central longitudinal axis of the oscillating path.

2. A method according to claim 1 characterised in that a plurality of pairs of consecutive samples are compared and the results averaged to provide an indication of the said displacement.

3. A method according to claim 2 characterised in that the signal formed by averaging the results of a plurality of comparisons is applied to the telecine CRT as an error signal such as to cause the longitudinal axis of the oscillating path to become aligned with the linear portion (16,18) of the reference target pattern (10).

4. A method according to any of claims 1 to 3 characterised in that the reference target pattern (10) includes two linear portions (16,18) extending at an angle to one another, the two portions being scanned sequentially.

5. A method according to claim 4 in which the linear portions (16,18) intersect, there being at the intersection an area (20) of dimensions greater than the width of the linear portions, the area (20) of greater dimensions being detected during the scan of the reference target (10) to indicate that the scan of the first linear portion is complete.

6. Apparatus for use in correcting film instability in a telecine apparatus, the apparatus including CRT means (30) for scanning a reference target pattern (10) occupying a predetermined position on a film relative to an image frame (14) and means (52) for adjusting the area of film scanned by the telecine apparatus responsive to the scan of the reference target such that the said area coincides substantially with the image frame; the apparatus being characterised in that the means for scanning the reference target pattern (10) is adapted to scan a linear portion of the pattern along a path which oscillates transversely of the linear portion, the apparatus further including means (42,44) for sampling the output of a photodetector (36) used to detect the intensity of light from the CRT means (30) transmitted by the film at intervals corresponding to the extremes of the oscillation, consecutive samples being compared to provide an indication of the displacement of the linear portion relative to the central longitudinal axis of the oscillating path.

7. Apparatus according to claim 6 characterised in that it includes means for averaging the results of comparisons of a plurality of pairs of consecutive samples.

8. Apparatus according to claim 6 characterised in that the signal formed by averaging the results of a plurality of comparisons is applied to the telecine CRT (30) as an error signal such as to cause the longitudinal axis of the oscillating path to become aligned with the linear portion of the reference target pattern.

9. Apparatus according to any of claims 6 to 8 characterised in that the means for scanning includes means for detecting the intersection of two linear portions of the reference target pattern and for causing a second of the linear portions to be scanned following detection of the intersection.

## Patentansprüche

1. Verfahren zur Korrektur von Filminstabilitäten in einem Fernsehfilmabtaster, bei welchem auf dem durch den Abtaster abzutastenden Film (12) ein Referenz-Targetmuster in einer vorbestimmten Position gegenüber einem Bildrahmen (14) ausgebildet wird, wobei durch Feststellen des Targetmusters (10) die Lage des Rahmens (14) ermittelt und die Lage des durch den Fernsehfilmabtaster abgetasteten Films (12) im wesentlichen so justiert werden kann, daß sie mit dem Bildfenster (14) übereinstimmt, **dadurch gekennzeichnet,** daß das Referenz-Targetmuster (10) mindestens einen linearen Teil (16,18) enthält, und jeder der linearen Teile von der Kathodenstrahlröhre des Fernsehfilmabtasters längs eines Weges abgetastet wird, welcher quer zum linearen Teil oszilliert, und daß das Ausgangssignal eines Photodetektors, der zur Feststellung der Intensität des von der Kathodenstrahlröhre durch den Film hindurch übertragenen Lichtes benutzt wird, in Intervallen abgefühlt wird, welche den Extremwerten der Oszillation des Abtastweges entsprechen, und daß aufeinanderfolgende Abfühlwerte verglichen werden, um eine Anzeige des Versetzens des linearen Teils (16,18) gegenüber der Mittellängsachse des oszillierenden Weges zu ergeben.

2. Verfahren nach Anspruch 1, **dadurch gekennzeichnet,** daß eine Mehrzahl von Paaren aufeinanderfolgender Abfühlwerte verglichen und die Ergebnisse gemittelt werden, um die Versatzanzeige zu ergeben.

3. Verfahren nach Anspruch 2, **dadurch gekennzeichnet,** daß das durch die Mittelwertbildung der Ergebnisse aus einer Mehrzahl von Vergleichen entstehende Signal der Kathodenstrahlröhre des Fernsehfilmabtasters als Fehlersignal zugeführt wird, derart, daß die Längsachse des oszillierenden Weges mit dem linearen Teil (16,18) des Referenz-Targetmusters (10) ausgerichtet wird.

4. Verfahren nach einem der Ansprüche 1 bis 3, **dadurch gekennzeichnet,** daß das Referenz-Targetmuster (10) zwei lineare Teile (16,18) hat, die unter einem Winkel zueinander verlaufen und nacheinander abgetastet werden.

5. Verfahren nach Anspruch 4, bei welchem die linearen Teile (16,18) sich schneiden, wobei an der Schnittstelle ein Bereich (20) größerer Abmessungen als die Breite der linearen Teile vorliegt und dieser Bereich (20) während der Abtastung des Referenz-Targetmusters (10) festgestellt wird als Anzeige, daß die Abtastung des ersten linearen Teils beendet ist.

6. Vorrichtung zur Verwendung für die Korrektur von Filminstabilitäten in einem Fernsehfilmabtaster mit einer Kathodenstrahlröhre (30) zum Abtasten eines Referenz-Targetmusters (10), welches gegenüber einem Bildrahmen (14) eine vorbestimmte Lage auf einem Film hat, und mit einer Einrichtung (52) zum Justieren des Bereichs des vom Fernsehfilmabtaster abgetasteten Films in Abhängigkeit von der Abtastung des Referenztargets derart, daß dieser Bereich im wesentlichen mit dem Bildrahmen übereinstimmt, **dadurch gekennzeichnet,** daß die Einrichtung zum Abtasten des Referenz-Targetmusters (10) dazu eingerichtet ist, einen linearen Teil des Musters längs eines quer zu diesem linearen Teil oszillierenden Weges abzutasten, und das weiterhin eine Einrichtung (42,44) vorgesehen ist zum Abfühlen des Ausgangssignals eines Photodetektors (36), welcher der Feststellung der Intensität des von der Kathodenstrahlröhre (30) durch den Film zu Intervallen, welche den Extremwerten der Oszillation entsprechen, übertragenen Lichtes dient, wobei aufeinanderfolgende Abtastwerte miteinander verglichen werden zur Lieferung einer Anzeige des Versatzes des linearen Teils gegenüber der Mittellängsachse des oszillierenden Weges.

7. Vorrichtung nach Anspruch 6, **gekennzeichnet durch** eine Einrichtung zur Mittelwertbildung der Ergebnisse von Vergleichen einer Mehrzahl von Paaren aufeinanderfolgender Abfühlwerte.

8. Vorrichtung nach Anspruch 6, **dadurch gekennzeichnet,** daß das durch Mittelung der Ergebnisse einer Mehrzahl von Vergleichen gebildete Signal der Kathodenstrahlröhre (30) des Fernsehfilmabtasters als Fehlersignal zugeführt wird derart, daß die Längsachse des oszillierenden Weges mit dem linearen Teil des Referenz-Targetmusters ausgerichtet wird.

9. Vorrichtung nach einem der Ansprüche 6 bis 8, **dadurch gekennzeichnet,** daß die Abtasteinrichtung eine Einrichtung zum Feststellen des Schnittbereiches der beiden linearen Teile des Referenz-Targetmusters und zur Veranlassung der Abtastung eines zweiten der linearen Teile nach dem Feststellen des Schnittbereiches enthält.

## Revendications

1. Procédé pour corriger l'instabilité du film dans un appareil de télécinéma dans lequel une forme cible de référence (10) est formée sur un film (12) pour être balayée par l'appareil de télécinéma, la forme cible (10) occupant une position prédéterminée sur le film (12) par rapport à un cadre d'image (14), par lequel, en détectant la forme cible (10), la position du cadre (14) peut être déterminée et la zone du film (12) balayée par l'appareil de télécinéma réglé substantiellement pour coïncider avec le cadre d'image (14); le procédé étant caractérisé en ce que la forme cible de référence (10) comporte au moins une partie linéaire (16,18), chacune des parties linéaires étant balayée par le tube à rayons cathodiques de télécinéma le long d'une trajectoire qui oscille transversalement à la partie linéaire; et en ce que la sortie d'un photodétecteur utilisé pour détecter l'intensité de lumière provenant du tube à rayons cathodiques transmise par le film est échantillonnée à des intervalles correspondant aux extrêmes de l'oscillation de la trajectoire de balayage; des échantillons consécutifs étant comparés pour fournir une indication du déplacement de la partie linéaire (16,18) relativement à l'axe longitudinal central de la trajectoire d'oscillation.

2. Procédé selon la revendication 1, caractérisé en ce qu'une pluralité de paires d'échantillons consécutifs sont comparées et qu'une moyenne des résultats est effectuée pour fournir une indication dudit déplacement.

3. Procédé selon la revendication 2, caractérisé en ce que le signal formé en effectuant la moyenne des résultats d'une pluralité de comparaisons est appliqué au tube à rayons cathodiques de télécinéma sous forme de signal d'erreur de manière à ce que l'axe longitudinal de la trajectoire d'oscillation s'aligne avec la partie linéaire (16,18) de la forme cible de référence (10).

4. Procédé selon l'une quelconque des revendications 1 à 3, caractérisé en ce que la forme cible de référence (10) comporte deux parties linéaires (16,18) s'étendant selon un certain angle l'une par rapport à l'autre, les deux parties étant balayées séquentiellement.

5. Procédé selon la revendication 4, dans lequel les parties linéaires (16,18) s'entrecoupent, donnant à leur intersection une zone (20) de dimensions supérieures à la largeur des parties linéaires, la zone (20) de dimensions supérieures étant détectée durant le balayage de la forme de référence (10) pour indiquer que le balayage de la première partie linéaire est terminé.

6. Appareil pour l'utilisation dans la correction de l'instabilité du film dans un appareil de télécinéma, l'appareil comprenant un moyen de tube à rayons cathodiques (30) pour balayer une forme cible de référence (10) occupant une position prédéterminée sur un film par rapport à un cadre d'image (14) et un moyen (52) pour régler la zone du film balayée par l'appareil de télécinéma suite au balayage de la forme de référence de manière à ce que ladite zone coïncide substantiellement avec le cadre d'image; l'appareil étant caractérisé en ce que le moyen pour balayer la forme cible de référence (10) est adapté pour balayer une partie linéaire de la forme le long d'une trajectoire qui oscille transversalement à la partie linéaire, l'appareil comprenant aussi un moyen (42,44) pour échantillonner la sortie d'un photodétecteur (36) utilisé pour détecter l'intensité de la lumière provenant du moyen de tube à rayons cathodiques (30) transmise par le film à des intervalles correspondant aux extrêmes de l'oscillation, des échantillons consécutifs étant comparés pour fournir une indication du déplacement de la partie linéaire relativement à l'axe longitudinal central de la trajectoire d'oscillation.

7. Appareil selon la revendication 6, caractérisé en ce qu'il comprend un moyen pour effectuer la moyenne des résultats de comparaisons d'une pluralité de paires d'échantillons consécutifs.

8. Appareil selon la revendication 6, caractérisé en ce que le signal formé en effectuant la moyenne des résultats d'une pluralité de comparaisons est appliqué au tube à rayons cathodiques de télécinéma (30) sous forme de signal d'erreur de manière à ce que l'axe longitudinal de la trajectoire d'oscillation s'aligne avec la partie linéaire de la forme cible de référence.

9. Appareil selon l'une quelconque des revendications 6 à 8, caractérisé en ce que le moyen pour balayer comporte un moyen pour détecter l'intersection de deux parties linéaires de la forme cible de référence et pour entraîner le balayage d'une deuxième des parties linéaires suite à la détection de l'intersection.
